# EUROPEAN PATENT SPECIFICATION

(11) **EP 1 554 927 B1**
(45) Date of publication and mention of the grant of the patent: **14.05.2008**
(21) Application number: 04257773.4
(22) Date of filing: 14.12.2004
(51) Int. Cl.: A01K 1/01

(54) **Pet sheet**
Schichtblatt für Haustiere
Feuille à couche pour animaux domestiques

(30) Priority: 16.01.2004 JP 2004009540
(43) Date of publication of application: 20.07.2005
(73) Proprietor: Uni-Charm Petcare Corporation, Tokyo 140-0031 (JP)
(72) Inventor: Kaneko, Shinya, Tokyo 140-0031 (JP); Ikegama, Takeshi, Tokyo 14-0031 (JP)
(74) Representative: Fitchett, Stuart Paul

(56) References cited:
- EP-A- 1 312 257
- DE-A1- 10 012 998
- US-A- 5 797 347
- US-B1- 6 227 145
- US-B1- 6 244 216

## Description

### BACKGROUND OF THE INVENTION

### Field of the Invention

The present invention relates to a pet sheet intended to absorb liquid such as urine discharged from pets such as dogs or cats.

### Description of the Related Art

Pet sheets (absorbent sheets for pets) have been used for absorbing liquid such as urine discharged from household pets such as dogs or cats. For example, Japanese Unexamined Patent Publication Nos. 2001-218535 and H11-332413 disclose such pet sheets.

Japanese Unexamined Patent Publication No. 2001-218535 discloses a pet sheet having an absorbent core composed of fluff pulp and absorbent polymer and a topsheet covering the upper side of the absorbent core. The topsheet is a liquid-permeable nonwoven fabric formed with a large number of apertures, from the periphery of which projections extend toward the absorbent core. In this pet sheet, the projections provide a clearance between the topsheet and the absorbent core so that pet's feet can be sufficiently spaced from the absorbent core to prevent absorbed liquid from adhering to pet's feet.

Japanese Unexamined Patent Publication No. H11-332413 which corresponds to US 6227145 B1 discloses a pet sheet having a backsheet, a topsheet (liquid-permeable nonwoven fabric), and an absorbent core (pulp layer) disposed between the backsheet and the topsheet. Furthermore, superabsorbent polymer is disposed between the topsheet and the pulp layer and between the backsheet and the pulp layer. The superabsorbent polymer adjacent the topsheet has a slower liquid absorption rate than the superabsorbent polymer adjacent the backsheet. In this pet sheet, the superabsorbent polymer is provided between the topsheet and the pulp layer so as to prevent liquid such as urine absorbed in the pulp layer from returning to the surface of the topsheet.

In the pet sheet disclosed in Japanese Unexamined Patent Publication No. 2001-218535, clearance is provided between the topsheet and the absorbent core to inhibit liquid return to the surface of the topsheet. However, since the absorbent core mainly composed of fluff pulp is located beneath the apertured topsheet, when pet's feet are put on it, urine absorbed in the absorbent core easily returns to the surface of the topsheet through the apertures and adheres to the pet's feet.

In the pet sheet disclosed in Japanese Unexamined Patent Publication No. H11-332413, on the other hand, the superabsorbent polymer is provided between the topsheet and the pulp layer to inhibit liquid from returning to the surface of the topsheet. However, no measure is taken to inhibit urine from widely diffusing inside the pulp layer due to hydrophilicity of pulp. Therefore, urine tends to diffuse widely inside the pulp layer to leave a large, noticeable stain on the topsheet. In addition, since the pulp layer tends to be saturated with urine in a short period of time, the pet sheet is not suitable for long time use.

In these pet sheets, moreover, since the topsheet is formed of a liquid-permeable nonwoven fabric, the surface of the topsheet is easily wetted with urine when a pressure is exerted on the absorbent core by pet's feet. Therefore, urine easily adheres to the pet's feet.

Japanese Unexamined Patent Publication No. 2001-218535 also suggests employing an apertured resin film for the topsheet. In the case where the apertured resin film is used for the topsheet, however, if the area ratio of the apertures to the topsheet is low, urine applied to the topsheet cannot be easily drawn into the absorbent core, leaving a residue on the topsheet. If the area ratio of the apertures to the topsheet is high, on the other hand, urine absorbed in the absorbent core easily returns to the surface of the topsheet through the apertures and adheres to the pet's feet.

### SUMMARY OF THE INVENTION

The present invention has been developed in view of the shortcomings in the prior art set forth above. It is therefore an object of the present invention to provide a thin pet sheet which can absorb and retain much liquid as a whole and effectively inhibit liquid from diffusing inside an absorbent core and adhering to pet's feet on a topsheet.

The present invention provides the pet sheet of independent claim 1. The dependent claims specify preferred but optional features.

According to the present invention, there is provided a pet sheet comprising a backsheet, a liquid-permeable topsheet a tissue paper layer and an absorbent core disposed between the backsheet and the topsheet for absorption and retention of liquid, wherein
the absorbent core is a pulp layer mixed with a first superabsorbent material and a second superabsorbent material is disposed in a spaced pattern between the absorbent core and the topsheet, wherein the first superabsorbent material has a faster liquid absorption rate than the second superabsorbent material, wherein the tissue paper layer is disposed between the topsheet and the second superabsorbent material, characterised in that a hydrophilic non-woven fabric sheet is located between the tissue paper layer and the topsheet.

In the pet sheet of the present invention, the second superabsorbent material having a relatively low liquid absorption rate allows rapid liquid migration from the topsheet to the underlying pulp layer. In addition, urine contained in the pulp layer can be effectively prevented from returning to the surface of the topsheet, because urine trying to ooze out of the pulp layer due to pressure exerted by pet's feet can be absorbed not only by the first superabsorbent material inside the absorbent core but also by the second superabsorbent material beneath the topsheet. This results in preventing the pet's feet from being wetted with urine.

Furthermore, since the first superabsorbent material having a faster liquid absorption rate is dispersed in the absorbent core, urine introduced into the absorbent core can be quickly absorbed by the first superabsorbent material, which inhibits diffusion of urine inside the absorbent core. Thus the pet sheet is suitable for long time use.

Preferably, the second superabsorbent material has a greater liquid absorption capacity under pressure than the first superabsorbent material so as to improve the effect of preventing liquid return to the surface of the topsheet.

Preferably, the topsheet is a resin film formed with a plurality of apertures for allowing liquid passage. Unlike nonwoven fabrics, such an apertured resin film does not absorb urine and therefore inhibits urine from adhering to the pet's feet.

In the present invention, the apertures may be tapered toward the absorbent core with peripheral walls projecting from an underside surface of the resin film. With such apertures, urine absorbed in the absorbent core can be effectively prevented from returning to the surface of the topsheet. It should be noted that even through these tapered apertures, urine applied to the surface of the topsheet can be quickly introduced into the absorbent core due to absorbency of the second superabsorbent material beneath the topsheet.

The hydrophilic sheet disposed between the topsheet and the second superabsorbent material functions to improve the liquid absorption rate of the pet sheet. The hydrophilic sheet also aids in preventing liquid return to the surface of the topsheet due to pressure exerted by pet's feet.

Preferably, the liquid absorption rate, measured as described herein, of the first superabsorbent material is at least 5 seconds faster than that of the second superabsorbent material so as to effectively inhibit diffusion of urine inside the absorbent core.

The pet sheet of the present invention can absorb and retain much liquid as a whole. In addition, since liquid such as urine can be quickly absorbed in the absorbent core while being inhibited from widely diffusing inside the absorbent core, the pet sheet may be made thin and suitable for long time use. Moreover, urine is less apt to adhere to pet's feet.

### BRIEF DESCRIPTION OF THE DRAWINGS

The present invention will be understood more fully from the detailed description given hereinafter and from the accompanying drawings of the preferred embodiments of the present invention, which, however, should not be taken to limit to the invention, but are for explanation and understanding only.

In the drawings:
Fig. 1 is a perspective view showing a pet sheet according to one embodiment of the present invention;
Fig. 2 is an exploded perspective view showing individual components of the pet sheet of Fig. 1;
Fig. 3 is a sectional view taken along line III-III of Fig. 1;
Fig. 4 is a sectional view taken along line IV-IV of Fig. 1;
Fig. 5 is an enlarged sectional view showing a topsheet, a hydrophilic sheet and a liquid absorbent layer; and
Fig. 6 is an explanatory drawing showing a method for measuring a liquid absorption capacity under pressure.

### DESCRIPTION OF THE PREFERRED EMBODIMENT

The present invention will be discussed hereinafter in detail in terms of the preferred embodiments according to the present invention with reference to the accompanying drawings. In the following description, numerous specific details are set forth in order to provide a thorough understanding of the present invention. It will be obvious, however, to those skilled in the art that the present invention may be practiced without these specific details. In other instances, well-known structures are not shown in detail in order not to obscure the features of the present invention.

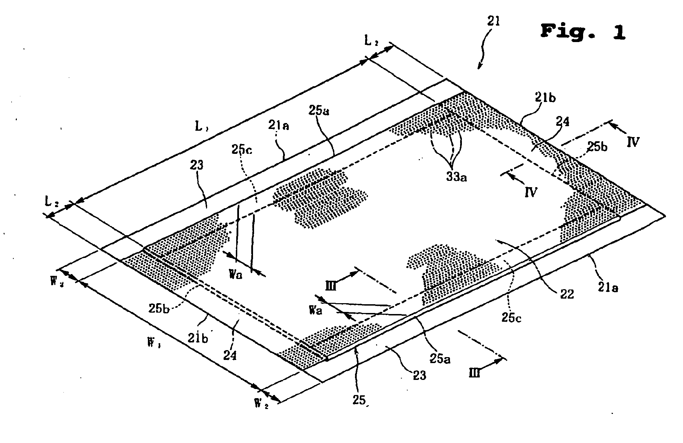

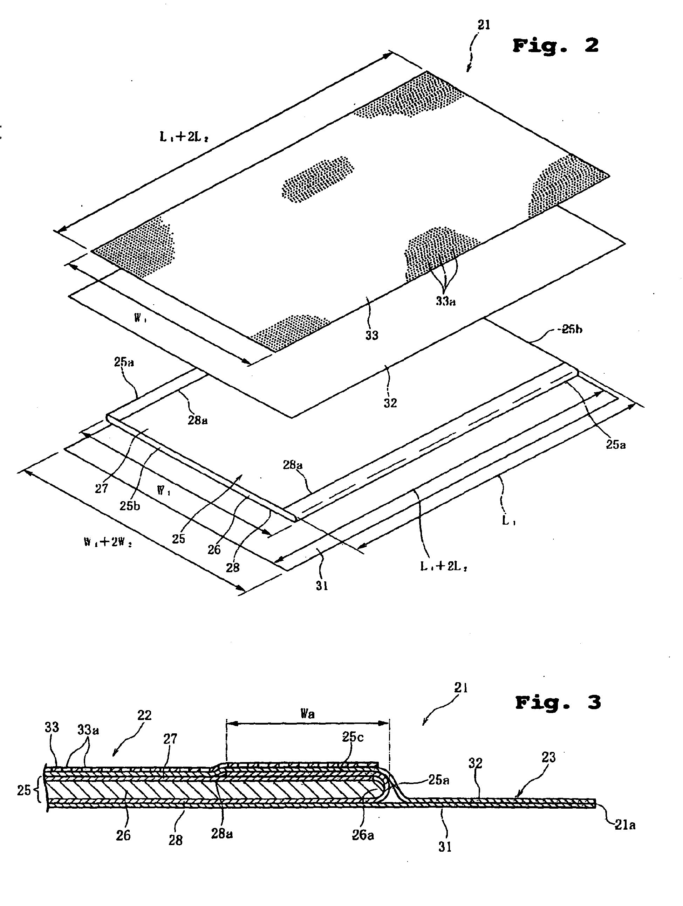

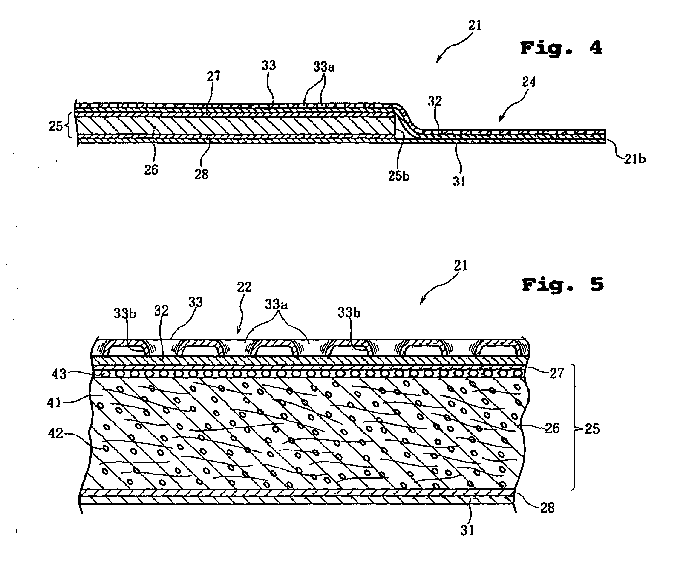

Fig. 1 is a perspective view showing a pet sheet 21 according to one embodiment of the present invention; Fig. 2 is an exploded perspective view showing individual components of the pet sheet 21; Fig. 3 is a sectional view taken along line III-III of Fig. 1; Fig. 4 is a sectional view taken along line IV-IV of Fig. 1; and Fig. 5 is an enlarged sectional view showing a topsheet, a hydrophilic sheet and a liquid absorbent layer.

Referring to Fig. 1, the pet sheet 21 is generally rectangular. The pet sheet 21 has a center region 22 of a length L1 and a width W1. Laterally outside the center region 22, long side regions 23 of a width W2 are provided along long sides 21a of the pet sheet 21. Longitudinally outside the center region 22, short side regions 24 of a width L2 are provided along short sides 21b of the pet sheet 21.

The center region 22 refers to a region where a liquid absorbent layer 25 is present (see Fig. 2). Therefore, the long side regions 23 are defined between long sides 25a of the liquid absorbent layer 25 and the long sides 21a of the pet sheet 21; the short side regions 24 are defined between short sides 25b of the liquid absorbent layer 25 and the short sides 21b of the pet sheet 21.

The length L1 and width W1 of the center region 22 may vary depending on the pet's length. For example, the length L1 may be set within the range of 400 to 900 mm and the width W1 within the range of 250 to 600 mm. The width W2 of the side region 23 and the width L2 of the side region 24 may be set within the range of 5 to 50 mm.

As shown in Fig. 2, the pet sheet 21 comprises a liquid-impermeable backsheet 31, the liquid absorbent layer 25 disposed on the upper side of the backsheet 31, a hydrophilic nonwoven fabric 32 covering the upper side of the liquid absorbent layer 25 and a liquid-permeable topsheet 33 disposed on the upper side of the hydrophilic nonwoven fabric 32.

The backsheet 31 and the hydrophilic nonwoven fabric 32 are coextensive with the pet sheet 21, so that their length is represented by L1 + 2 · L2 and their width is by W1 + 2 · W2. The topsheet 33 is coextensive longitudinally with the pet sheet 21 but laterally with the center region 22, so that its length is represented by L1 + 2 · L2 and its width is by W1.

In the center region 22, the backsheet 31, the liquid absorbent layer 25, the hydrophilic nonwoven fabric 32 and the topsheet 33 are stacked as shown in Figs. 3 and 4.

In Fig. 3, the backsheet 31 and the hydrophilic nonwoven fabric 32 extend beyond the long sides 25a of the liquid absorbent layer 25 to provide the long side regions 23 where the hydrophilic nonwoven fabric 32 is laid on the backsheet 31.

In Fig. 4, on the other hand, the backsheet 31, the hydrophilic nonwoven fabric 32 and the topsheet 33 extend beyond the short sides 25b of the liquid absorbent layer 25 to provide the short side regions 24 where the hydrophilic nonwoven fabric 32 is laid on the backsheet 31 and the topsheet 33 is on the hydrophilic nonwoven fabric 32.

In the center region 22, the liquid absorbent layer 25 is bonded to the backsheet 31 through a hot-melt type adhesive. A similar adhesive is used for bonding the liquid absorbent layer 25 to the hydrophilic nonwoven fabric 32 and bonding the topsheet 33 to the hydrophilic nonwoven fabric 32. However, the adhesive used for bonding the liquid absorbent layer 25 to the hydrophilic nonwoven fabric 32 and bonding the topsheet 33 to the hydrophilic nonwoven fabric 32 is applied in a spiral, dot or striped pattern in such an amount as not to interfere with liquid migration (e.g., within the range of 0.5 to 10 g/m²).

In both the long side regions 23 and the short side regions 24, the hydrophilic nonwoven fabric 32 is bonded to the backsheet 31 through a hot-melt type adhesive. In the short side regions 24, furthermore, the topsheet 33 is bonded to the hydrophilic nonwoven fabric 32 through a similar adhesive that is applied in a spiral, dot or striped pattern in such an amount as not to interfere with liquid migration.

The backsheet 31 is a liquid-impermeable sheet such as a resin film of polyethylene (PE) or a water-repellent or hydrophobic nonwoven fabric. The nonwoven fabric may be a meltblown, a spunbonded, or a laminated material thereof (e.g., a spunbonded-meltblown laminate).

As shown in Figs. 3 and 4, the liquid absorbent layer 25 includes an absorbent core 26 in the form of a rectangular sheet. The upper side of the absorbent core 26 is covered with a hydrophilic tissue paper 27 colored blue, green or red. The tissue paper 27 is almost coextensive with the absorbent core 26. The lower side of the absorbent core 26 is covered with an uncolored or white hydrophilic tissue paper 28. Along the long sides 25a of the liquid absorbent layer 25, the tissue paper 28 is folded back against the upper side of the absorbent core 26 to cover side portions 26a of the absorbent core 26. Thus, side edges 28a of the tissue paper 28 are located on the colored tissue paper 27 to provide the liquid absorbent layer 25 with border areas 25c of a width Wa. In the border areas 25c, the white tissue paper 28 extends over the colored tissue paper 27.

As shown in Fig. 5, the absorbent core 26 is formed by mixing a fluff pulp (crushed pulp) layer 41 with first particulate superabsorbent material 42. Between the absorbent core 26 and the colored tissue paper 27, there is located second particulate superabsorbent material 43. The second particulate superabsorbent material 43 is disposed in a spaced pattern so as not to interfere with migration of urine from the tissue paper 27 to the absorbent core 26.

For the first and second superabsorbent material 42, 43, there may be used addition polymers (e.g., polyacrylic acid, polyvinyl alcohol, maleic anhydride), condensation polymers (e.g., polyether), polysaccharides (e.g., starch, cellulose) and proteins (e.g., collagen). Examples may also include cross-linked sodium polyacrylate, copolymer of sodium polyacrylate and starch, and copolymer of polyacrylonitrile and cellulose. Most preferably used are polyacrylic acid, sodium polyacrylate, and cross-linked sodium polyacrylate.

Here the first superabsorbent material 42 has a faster liquid absorption rate than the second superabsorbent material 43.

For example, particulate polymer whose surface is cross-linked may be used for the second superabsorbent material 43, while particulate polymer whose surface is not cross-linked at all or weakly cross-linked may be used for the first superabsorbent material 42. In this case, polysaccharide such as starch or cellulosic compound may be used for the first superabsorbent material 42 in place of the particulate polymer. The particulate polymer whose surface is cross-linked has a slower liquid absorption rate but can be easily kept in the form of particles because it is less apt to gel even after absorption of liquid. Accordingly, the polymer disposed between the absorbent core 26 and the tissue paper 27 can be easily maintained in a spaced pattern so as not to interfere with liquid migration from the tissue paper 27 to the absorbent core 26.

In order to make the liquid absorption rate of the first superabsorbent material 42 faster than that of the second superabsorbent material 43, alternatively, the particle size of the first superabsorbent material 42 may be made smaller than that of the second superabsorbent material 43.

The fluff pulp layer 41 of the absorbent core 26 has a basis weight in the range of about 50 to 200 g/m². The first superabsorbent material 42 has a basis weight in the range of about 10 to 70 g/m², while the second superabsorbent material 43 has a basis weight in the range of about 20 to 80 g/m², wherein the basis weight of the second superabsorbent material 43 is preferably 5 to 20 g/m² larger than that of the first superabsorbent material 42.

The liquid absorption rate may be measured by a vortex method as follows.

First, an aqueous solution having a sodium chloride concentration of 0.9% is prepared by dissolving 9 g of sodium chloride in 991 g of ion-exchanged water. 50 g of the sodium chloride solution is put in a 100 ml (milliliter) beaker and kept at 25°C in a temperature-controlled room. The sodium chloride solution is then stirred with a rotor (diameter of 8 mm; length of 30 mm) of a magnetic stirrer revolving in the beaker at 600 rpm, and 2.0 g of superabsorbent material is added to the sodium chloride solution. The time a vortex takes to disappear from the sodium chloride solution in the beaker (i.e., the time the superabsorbent material takes to complete liquid absorption) is measured from the addition of the superabsorbent material and taken as the liquid absorption rate.

When measured by this vortex method, the liquid absorption rate of the second superabsorbent material 43 disposed on the absorbent core 26 is in the range of 10 to 40 seconds, preferably in the range of 25 to 40 seconds, while the liquid absorption rate of the first superabsorbent material 42 contained in the absorbent core 26 is equal to or less than 25 seconds, preferably equal to or less than 15 seconds, wherein the liquid absorption rate of the first superabsorbent material 42 is preferably at least 5 seconds faster, more preferably at least 10 seconds faster than that of the second superabsorbent material 43.

Both the first and second superabsorbent materials 42, 43 can retain 30 to 50 times their own weight in liquid. The liquid retention capacity may be measured as follows.

First, 1.8 liter of aqueous solution having a sodium chloride concentration of 0.9% is put in a 2 liter beaker. 2.0 g of superabsorbent material is put into a cotton bag, and then, 100 ml of sodium chloride solution is poured into the cotton bag and the cotton bag containing the superabsorbent material is concurrently immersed in the sodium chloride solution in the beaker. After immersion for 15 minutes, the cotton bag is taken out and the bag is closed with a rubber band and dehydrated for one minute at an acceleration of 167G using a spin-dryer (Type H-122 manufactured by KOKUSAN Corporation, Japan). The same operations are carried out against the cotton bag alone without putting the superabsorbent material into the cotton bag. The liquid retention capacity C (g/g) can be obtained by the following equation: C = {(A-B)/S} and expressed in terms of "times", where A represents the total weight (g) of the cotton bag and the superabsorbent material after dehydration, B represents the weight (g) of the cotton bag alone after dehydration, and S represents the weight of the superabsorbent material before absorption (2 g).

The second superabsorbent material 43, which has a slower liquid absorption rate, has a greater liquid absorption capacity under pressure than the first superabsorbent material 42. The liquid absorption capacity under pressure of the second superabsorbent material 43 is equal to or greater than 25 ml/g, while the liquid absorption capacity under pressure of the first superabsorbent material 42 is equal to or greater than 15 ml/g, wherein the liquid absorption capacity under pressure of the second superabsorbent material 43 is at least 5 ml/g greater, preferably at least 10 ml/g greater than that of the first superabsorbent material 42.

Since the second superabsorbent material 43 disposed between the absorbent core 26 and the topsheet 33 has a greater liquid absorption capacity under pressure, even when urine tries to ooze out of the fluff pulp layer 41 of the absorbent core 26 due to pressure exerted by the pet's feet on the pet sheet 21, it can be absorbed and retained by the second superabsorbent material 43. Thus, liquid absorbed in the absorbent core 26 is less apt to appear on the topsheet 33.

The liquid absorption capacity under pressure may be measured as follows.

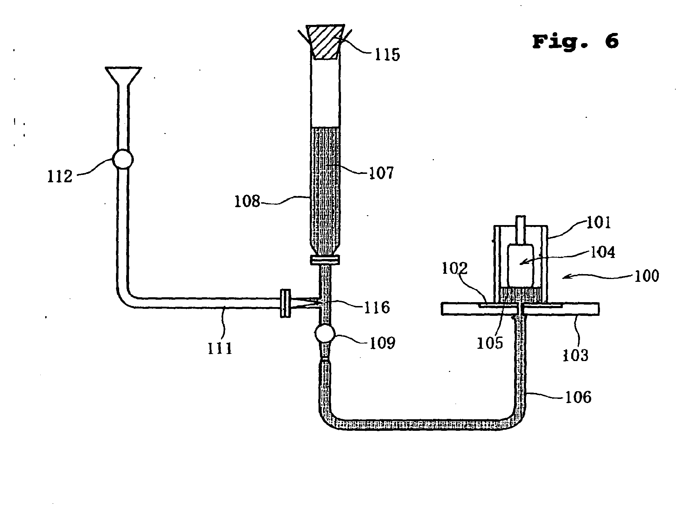

Referring to Fig. 6, a vessel 100 is mounted on a support table 103. The vessel 100 is constructed by placing a nylon net 102 of a 75 µmm mesh at a bottom of an acrylic hollow cylinder 101 having an inner diameter of 20 mm and a height of 50 mm. 0.1±0.001 g of superabsorbent material 105 to be measured is put in the vessel 100. Then, a weight 104 having a diameter of 19 mm at its bottom surface and a weight of 60 g is put in the vessel 100 to subject the superabsorbent material 105 to a pressure.

A conduit 106 has a water intake beneath the nylon net 102. The conduit 106 is connected with a burette 108 whose upper end is closed with a plug 115. The burette 108 is filled with an aqueous solution 107 having a sodium chloride concentration of 0.9%.

A branch pipe 111 is connected with the conduit 106 below the burette 108, wherein a connection point 116 between the branch pipe 111 and the conduit 106 is placed at the same height position as the lower end of the hollow cylinder 101. From the connection point 116, the branch pipe 111 extends horizontally and then upwardly.

When a valve 112 is opened, the branch pipe 111 communicates with the atmosphere. However, the inside of the burette 108 does not communicate with the atmosphere. When a valve 109 is opened, the sodium chloride solution 107 inside the burette 108 flows into the conduit 106. At this time, a part of the sodium chloride solution 107 flows into the horizontal part of the branch pipe 111, but the horizontal part of the branch pipe 111 is adjusted in length so that the sodium chloride solution 107 will not reach the vertical part of the branch pipe 111.

Thus the sodium chloride solution 107 is supplied to the bottom of the hollow cylinder 101 without any pressure applied, and the superabsorbent material 105 sucks up the sodium chloride solution 107 from the conduit 106. The sodium chloride solution 107 is additionally supplied from the burette 108 to compensate for the sucked amount.

The amount (volume) of sodium chloride solution absorbed by the superabsorbent material for 120 minutes is measured. The value obtained by dividing the absorption amount by the weight of the superabsorbent material (0.1 g) is taken as the liquid absorption capacity under pressure (ml/g).

The hydrophilic nonwoven fabric 32 may be a spunlaced nonwoven fabric formed of cellulosic fibers (e.g., pulp and rayon) alone or a combination of cellulosic fibers and synthetic resin fibers treated to be hydrophilic, a through-air bonded nonwoven fabric formed of heat-fusible synthetic resin fibers treated to be hydrophilic, or a point-bonded nonwoven fabric formed of heat-fusible synthetic resin fibers treated to be hydrophilic. Alternatively, there may be used a spunbonded nonwoven fabric treated to be hydrophilic or a laminated material manufactured by laminating microfibers to a spunbonded nonwoven fabric (e.g., meltblown-spunbonded-meltblown laminate).

In both thickness and basis weight, the hydrophilic nonwoven fabric 32 is greater than (preferably at least 1.2 times, more preferably at least 1.5 times) the tissue paper 27.

The tissue paper may have a basis weight of about 15 g/m², while the hydrophilic nonwoven fabric 32 may have a basis weight equal to or greater than 23 g/m², preferably equal to or greater than 30 g/m².

The topsheet 33 may be an apertured resin film (e.g., apertured PE film having a basis weight of about 10 to 40 g/m²) formed with a large number of apertures 33a for allowing liquid passage. Preferably, a whitening agent such as titanium oxide is added to the resin film. More specifically, the topsheet 33 is a so-called perforated film in which the apertures 33a are formed by softening a resin film on a net-like or apertured base and then sucking the resin film from the underside of the net-like or apertured base.

In this perforated film, as shown in Fig. 5 on an enlarged scale, the individual apertures 33a are through-holes extending in the thickness direction of the film and tapered toward the liquid absorbent layer 25 with peripheral walls 33b projecting from the underside surface of the film. The area ratio of the apertures 33a of the topsheet 33 is in the range of 20 to 60%. The perforated film may be treated to be hydrophilic such as by applying a surfactant to the film surface or kneading the resin with a surfactant.

Hereinbelow the liquid absorbing function of the pet sheet 21 will be described.

Urine applied to the center region 22 can be absorbed and retained in the liquid absorbent layer 25 via the hydrophilic nonwoven fabric 32 after passing through the apertures 33a of the topsheet 33. Since the second superabsorbent material 43 having a slow liquid absorption rate is located beneath the tissue paper 27 and the first superabsorbent material 42 having a faster liquid absorption rate than the second superabsorbent material 43 is dispersed in the fluff pulp layer 41, the liquid absorbent layer 25 can retain much water as a whole. Here, a part of urine after passing through the tissue paper 27 can be absorbed by the second superabsorbent material 43, but since the second superabsorbent material 43 has a relatively slow liquid absorption rate and is disposed in a spaced pattern, the rest of urine can be quickly introduced into the absorbent core 26.

Since the first superabsorbent material 42 having a faster liquid absorption rate is dispersed in the fluff pulp layer 41, urine introduced into the absorbent core 26 can be quickly absorbed by the first superabsorbent material 42, which inhibits diffusion of urine inside the fluff pulp layer 41. Therefore, even when the pet sheet 21 is used for a long time, urine will not leave a noticeable stain on the pet sheet 21.

In the topsheet 33, moreover, the individual apertures 33a are tapered toward the liquid absorbent layer 25, as shown in Fig. 5. Therefore, urine absorbed in the liquid absorbent layer 25 is inhibited from oozing out to the surface of the topsheet 33.

As described above, the apertures 33a tapered toward the liquid absorbent layer 25 are effective in preventing liquid return to the surface of the topsheet 33, but are also highly resistant to liquid flow from the surface of the topsheet 33 toward the liquid absorbent layer 25. However since the hydrophilic nonwoven fabric 32, the hydrophilic tissue paper 27 and the second superabsorbent material 43 are located beneath the topsheet 33, urine applied to the surface of the topsheet 33 can easily pass through the apertures 33a due to hydrophilicity of the nonwoven fabric 32 and the tissue paper 27 and absorbency of the second superabsorbent material 43.

When pets micturate with their feet on the pet sheet 21, urine contained in the fluff pulp layer 41 may try to ooze out of it due to pressure exerted on the absorbent core 26. However such urine can be prevented from returning to the surface of the topsheet 33 because the second superabsorbent material 43, the hydrophilic tissue paper 27 and the hydrophilic nonwoven fabric 32 are located between the absorbent core 26 and the topsheet 33.

Particularly because the second superabsorbent material 43 has a great liquid absorption capacity under pressure, it can absorb urine even when pet's feet are put thereon, thereby inhibiting urine from adhering to the pet's feet.

Moreover, since the topsheet 33 is formed of a resin film that is not allowed to absorb and retain liquid in itself, the surface of the topsheet 33 can be easily kept dry.

On the other hand, urine applied to the side regions 23, 24 may be absorbed and retained in the hydrophilic nonwoven fabric 32 outside the center region 22 or migrate to the center region 22 via the hydrophilic nonwoven fabric 32 for absorption and retention in the liquid absorbent layer 25.

Although the present invention has been illustrated and described with respect to exemplary embodiment thereof, it should be understood by those skilled in the art that the foregoing and various other changes, omission and additions may be made therein and thereto, without departing from the scope of the present invention. Therefore, the present invention should not be understood as limited to the specific embodiment set out above but to include all possible embodiments which can be embodied within a scope set out in the appended claims.

## Claims

1. A pet sheet (21) comprising a backsheet (31), a liquid-permeable topsheet (33), a tissue paper layer (27) and an absorbent core (26) disposed between the backsheet and the topsheet for absorption and retention of liquid, wherein
the absorbent core is a pulp layer (41) mixed with a first superabsorbent material (42) and a second superabsorbent material (43) is disposed in a spaced pattern between the absorbent core and the topsheet, wherein the first superabsorbent material has a faster liquid absorption rate than the second superabsorbent material, wherein the tissue paper layer (27) is disposed between the topsheet and the second superabsorbent material, **characterised in that** a hydrophilic non-woven fabric sheet (32) is located between the tissue paper layer (27) and the topsheet (33).

2. A pet sheet according to Claim 1, wherein the hydrophilic non-woven fabric sheet has a thickness that is at least 1.2 times, more preferably at least 1.5 times, that of the tissue paper layer.

3. A pet sheet according to Claim 1 or Claim 2, wherein the hydrophilic non-woven fabric sheet has a basis weight that is at least 1.2 times, more preferably at least 1.5 times, that of the tissue paper layer.

4. A pet sheet according to any preceding claim, wherein the second superabsorbent material has a greater liquid absorption capacity under pressure than the first superabsorbent material.

5. A pet sheet according to any preceding claim, wherein the liquid absorption rate of the first superabsorbent material is at least 5 seconds faster than that of the second superabsorbent material.

6. A pet sheet according to any preceding claim, wherein the topsheet is a resin film formed with a plurality of apertures (33a) for allowing liquid passage.

7. A pet sheet according to Claim 6, wherein the apertures are tapered toward the absorbent core with peripheral walls projecting from an underside surface of the resin film.

8. A pet sheet according to Claim 6 or Claim 7, wherein the area ratio of the apertures to the topsheet is in the range of 20 to 60%.

## Patentansprüche

1. Haustierunterlage (21), umfassend eine hintere Lage (31), eine flüssigkeitsdurchlässige obere Lage (33), eine Tissue-Papierschicht (27) und einen zwischen der hinteren Lage und der oberen Lage angeordneten absorbierenden Kern (26) zur Absorption und Speicherung von Flüssigkeit, wobei
der absorbierende Kern eine mit einem ersten superabsorbierenden Material (42) gemischte Zellstoffschicht (41) ist und ein zweites superabsorbierendes Material (43) in einem mit Abständen versehenen Muster zwischen dem absorbierenden Kern und der oberen Lage angeordnet ist, wobei das erste superabsorbierende Material eine schnellere Flüssigkeitsabsorptionsrate als das zweite superabsorbierende Material aufweist, wobei die Tissue-Papierschicht (27) zwischen der oberen Lage und dem zweiten superabsorbierenden Material angeordnet ist, **gekennzeichnet dadurch, dass** eine hydrophile Viesstofflage (32) zwischen der Tissue-Papierschicht (27) und der oberen Lage (33) angeordnet ist.

2. Haustierunterlage nach Anspruch 1, wobei die hydrophile Vliesstofflage eine Dicke aufweist, die mindestens das 1,2-fache, vorzugsweise mindestens das 1,5-fache von der der Tissue-Papierschicht beträgt.

3. Haustierunterlage nach Anspruch 1 oder 2, wobei die hydrophile Vliesstofflage ein Grundgewicht aufweist, das mindestens das 1,2-fache, vorzugsweise mindestens das 1,5-fache von dem der Tissue-Papierschicht beträgt.

4. Haustierunterlage nach einem der vorhergehenden Ansprüche, wobei das zweite superabsorbierende Material eine größere Flüssigkeitsabsorptionskapazität unter Druck als das erste superabsorbierende Material aufweist.

5. Haustierunterlage nach einem der vorhergehenden Ansprüche, wobei die Flüssigkeitsabsorptionsrate des ersten superabsorbierenden Materials mindestens fünf Sekunden schneller als die des zweiten superabsorbierenden Materials ist.

6. Haustierunterlage nach einem der vorhergehenden Ansprüche, wobei die obere Lage ein mit mehreren Öffnungen (33a) gebildeter Kunstharzfilm zum Ermöglichen des Durchlaufens von Flüssigkeit ist.

7. Haustierunterlage nach Anspruch 6, wobei sich die Öffnungen mit umgebenden Wänden, die von einer unterseitigen Oberfläche des Kunstharzfilms hervorragen, zum absorbierenden Kern hin verjüngen.

8. Haustierunterlage nach Anspruch 6 oder 7, wobei das Flächenverhältnis der Öffnungen zur oberen Lage im Bereich von 20 bis 60 % liegt.

## Revendications

1. Feuille pour animaux de compagnie (21) comprenant une feuille inférieure (31), une feuille supérieure perméable aux liquides (33), une couche de papier de soie (27) et une partie centrale absorbante (26) disposée entre la feuille inférieure et la feuille supérieure en vue de l'absorption et de la rétention de liquides, dans laquelle
la partie centrale absorbante est une couche de cellulose (41) mélangée à un premier matériau superabsorbant (42), et un deuxième matériau superabsorbant (43) est disposé suivant un motif espacé entre la partie centrale absorbante et la feuille supérieure, le premier matériau superabsorbant présentant une vitesse d'absorption de liquide plus rapide que celle du deuxième matériau superabsorbant, et la couche de papier de soie (27) étant disposée entre la feuille supérieure et le deuxième matériau superabsorbant, **caractérisée en ce qu'**une feuille d'étoffe non tissée hydrophile (32) est agencée entre la couche de papier de soie (27) et la feuille supérieure (33).

2. Feuille pour animaux de compagnie selon la revendication 1, dans laquelle la feuille d'étoffe non tissée hydrophile a une épaisseur qui est d'au moins 1,2 fois, et de préférence d'au moins 1,5 fois, celle de la couche de papier de soie.

3. Feuille pour animaux de compagnie selon la revendication 1 ou la revendication 2, dans laquelle la feuille d'étoffe non tissée hydrophile a une masse surfacique qui est d'au moins 1,2 fois, et de préférence d'au moins 1,5 fois, celle de la couche de papier de soie.

4. Feuille pour animaux de compagnie selon l'une quelconque des revendications précédentes, dans laquelle le deuxième matériau superabsorbant a une capacité d'absorption de liquide sous pression qui est supérieure à celle du premier matériau superabsorbant.

5. Feuille pour animaux de compagnie selon l'une quelconque des revendications précédentes, dans laquelle la rapidité d'absorption de liquide du premier matériau superabsorbant est supérieure d'au moins 5 secondes à celle du deuxième matériau superabsorbant.

6. Feuille pour animaux de compagnie selon l'une quelconque des revendications précédentes, dans laquelle la feuille supérieure est un film de résine présentant une pluralité d'ouvertures (33a) destinées à permettre un passage des liquides.

7. Feuille pour animaux de compagnie selon la revendication 6, dans laquelle les ouvertures se resserrent en allant vers la partie centrale absorbante, avec des parois périphériques dépassant de la surface inférieure du film de résine.

8. Feuille pour animaux de compagnie selon la revendication 6 ou la revendication 7, dans laquelle le rapport de surface des ouvertures par rapport à la feuille supérieure se situe dans une plage allant de 20 à 60 %.
